Europäisches Patentamt

European Patent Office

Office européen des brevets

(19)

(11) Veröffentlichungsnummer: **0 142 211**
**B1**

(12) **EUROPÄISCHE PATENTSCHRIFT**

(45) Veröffentlichungstag der Patentschrift: **29.08.90**

(51) Int. Cl.⁵: **H 02 K 7/02**

(21) Anmeldenummer: **84201632.1**

(22) Anmeldetag: **12.11.84**

(54) **Elektromotor mit einer Dämpfungseinrichtung.**

(30) Priorität: **14.11.83 AT 4007/83**

(43) Veröffentlichungstag der Anmeldung:
**22.05.85 Patentblatt 85/21**

(45) Bekanntmachung des Hinweises auf die Patenterteilung:
**29.08.90 Patentblatt 90/35**

(84) Benannte Vertragsstaaten:
**DE FR GB IT NL SE**

(56) Entgegenhaltungen:
**EP-A-0 050 771**
**DE-A-2 717 969**
**GB-A-1 213 584**
**US-A-2 114 106**
**US-A-3 790 831**

(73) Patentinhaber: **N.V. Philips'**
**Gloeilampenfabrieken**
**Groenewoudseweg 1**
**NL-5621 BA Eindhoven (NL)**

(72) Erfinder: **Bukoschek, Romuald Leander**
**P/A INT. OCTROOIBUREAU B.V. Prof. Holstlaan 6**
**NL-5656 AA Eindhoven (NL)**
Erfinder: **Schemmann, Hugo**
**p/a INT. OCTROOIBUREAU B.V. Prof. Holstlaan 6**
**NL-5656 AA Eindhoven (NL)**

(74) Vertreter: **Schrijnemaekers, Hubert Joannes**
**Maria et al**
**Internationaal Octrooibureau B.V. Prof.**
**Holstlaan 6**
**NL-5656 AA Eindhoven (NL)**

Courier Press, Leamington Spa, England.

EP 0 142 211 B1

## Beschreibung

Die Erfindung betrifft einen Elektromotor mit einer Dämpfungseinrichtung, die eine gegenüber dem Abtrieb frei drehbar und axial beweglich angeordnete, zumindest teilweise aus magnetisierbarem Material bestehende, scheibenförmige Dämpfungsmasse aufweist, die unter der Einwirkung einer magnetischen Kraft gegen einen mit dem Abtrieb umlaufenden Anschlag gedrückt wird. Ein derartiger Elektromotor mit einer Dämpfungseinrichtung, die in bekannter Weise zur Verbesserung des Anlaufverhaltens bzw. zur Stabilisierung des Laufes eines Motors herangezogen wird, ist aus der US—PS—3 790 831 bekannt, wobei die magnetische Kraft, welche die Dämpfungsmasse gegen einen mit dem Abtrieb umlaufenden Anschlag drückt, durch einen in die Dampfungsmasse eingebetteten Permanentmagneten gebildet ist. Das Vorsehen eines solchen Permanentmagneten ist aber relativ teuer und aufwendig. Ebenfalls bekannt ist, wie beispielsweise die US—PS 3 197 659 zeigt, die Dämpfungsmasse mit einer eigenen Feder an einen mit dem Abtrieb umlaufenden Anschlag anzudrücken, was aber ebenfalls einen zusätzlichen Aufwand erforderlich macht, dies auch im Hinblick auf die Montage der gesamten Einrichtung.

Die Erfindung hat sich zum Ziel gesetzt, bei einem Elektromotor mit einer Dämpfungseinrichtung insgesamt eine besonders einfache Konstruktion anzugeben. Erfindungsgemäss ist hierzu vorgesehen, dass die Dämpfungsmasse im Bereich eines manetischen mit Abstand neben dem Synchronmotor wirksamen Streufeldes des Motors angeordnet ist und der Anschlag zwischen dem Läufer des Motors und der Dämpfungsmasse liegt, wobei die auf die Dämpfungsmasse einwirkende magnetische Kraft durch ein magnetisches Streufeld des Motors gebildet ist. Auf diese Weise erübrigt sich ein eigener Permanentmagnet zum Aufbringen der magnetischen Kraft, welche die Dämpfungsmasse gegen einen mit dem Abtrieb umlaufenden Anschlag drückt, da diese magnetische Kraft unmittelbar durch ein magnetisches Streufeld des Motors gebildet wird. Somit wird hier ein magnetisches Streufeld des Motors für einen speziellen Verwendungszweck herangezogen. Zu erwähnen ist dabei, dass schon andere Verwendungszwecke für die Ausnützung eines magnetischen Streufeldes eines Motors an sich bekannt sind, die aber mit dem hier vorliegenden Verwendungszweck nichts zu tun haben; so zeigt beispielsweise die US—PS 3 280 352 eine bei der elektrischen Erregung des Motors durch ein magnetisches Streufeld desselben verstellbare Kupplungs- und Bremsscheibe und die DE—OS 2 362 611 die Bildung einer Rutschkupplung zwischen dem Läufer und dem Abtrieb eines Motors, wobei die Kupplungskraft durch das magnetische Streufeld des dauermagnetisch ausgebildeten Läufers aufgebracht wird.

Als vorteilhaft hat sich erwiesen, wenn die Dämpfungsmasse im Bereich des magnetischen Streufeldes der elektrischen Erregung der Spulen des Stators angeordnet ist. Da das magnetische Streufeld der elektrischen Erregung des Motors auch noch mit Abstand neben dem Motor wirksam ist, bestehen bei der Ausnützung eines solchen Streufeldes für das Andrücken der Dämpfungsmasse an den mit dem Abtrieb umlaufenden Anschlag keine wesentlichen baulichen Beschränkungen hinsichtlich der Anordnung der Dämpfungsmasse und des Anschlages am Abtrieb vom Motor, was aus konstruktiven Gründen wünschenswert sein kann.

Als vorteilhaft hat sich aber auch erwiesen, wenn bei einem Motor mit einem dauermagnetischen Läufer die Dämpfungsmasse im Bereich des magnetischen Streufeldes des Läufers angeordnet ist. Auf diese Weise lässt sich, wie vielfach erwünscht, eine sehr raumsparende Anordnung erreichen, da die Dämpfungsmasse nahe dem Läufer angeordnet werden kann.

In diesem Zusammenhang hat es sich als sehr vorteilhaft erwiesen, wenn bei einem zylindrisch ausgebildeten Läufer des Motors der Anschlag durch eine Seitenfläche des Läufers gebildet ist. Auf diese Weise wird eine besonders raumsparende Anordnung erhalten.

Weiters hat sich als vorteilhaft erwiesen, wenn die Dämpfungsmasse durch zwei nebeneinander liegende Scheiben gebildet ist, von welchen die dem Anschlag benachbarte, erste Scheibe aus nichtmagnetisierbarem Material und die andere, zweite Scheibe aus magnetisierbarem Material besteht. Auf diese Weise können die beiden Scheiben mehr oder weniger unabhängig voneinander dimensioniert werden, wobei dann nur die zweite Scheibe die Kraft zum Andrücken der Dämpfungsmasse an den Anschlag liefert. Beispielsweise kann hierbei die erste Scheibe aus Messing und die zweite Scheibe aus Eisen bestehen. Da Messing eine höhere Dichte als Eisen aufweist, lässt sich in einem solchen Fall die Dämpfungsmasse besonders günstig dimensionieren.

In diesem Zusammenhang hat sich als besonders vorteilhaft erwiesen, wenn die zweite Scheibe als eine gegenüber der ersten, vorwiegend die Dämpfungsmasse bildenden Scheibe, mindestens um das Zehnfache dünnere Scheibe ausgebildet ist. In diesem Fall wird dann die eigentliche Dämpfungsmasse praktisch nur durch die erste Scheibe bestimmt.

Ebenfalls als vorteilhaft hat sich erwiesen, wenn die zweite Scheibe vom Abtrieb freigestellt ist. Auf diese Weise bewirkt sie selbst keine Reibungsverluste gegenüber dem Abtrieb und dient nur zum Andrücken der ersten Scheibe an den mit dem Abtrieb umlaufenden Anschlag. Hierzu kann die zweite Scheibe beispielsweise auf eine zylindrische Absetzung an der ersten Scheibe aufgesetzt oder an die erste Scheibe angeklebt werden.

Falls erwünscht, kann zwischen den Anschlag und die Dämpfungsmasse auch noch eine Scheibe mit vorgegebenen Gleiteigenschaften eingefügt werden, um so die Reibungsverhältnisse zwischen der Dämpfungsmasse und dem Anschlag beeinflussen zu können, wie dies auch in der eingangs angeführten US—UPS 3 790 831 angegeben ist. In diesem Zusammenhang hat es sich als sehr vorteilhaft erwiesen, wenn die einander gegenüberliegenden Seitenflächen des Anschlages und der Dämpfungsmasse mit einem Schmiermittel versehen sind. Auf diese Weise ist ebenfalls eine Einflussnahme auf die Reibungsverhältnisse zwischen der Dämpfungsmasse und dem Anschlag dahingehend möglich, dass ein Durchrutschen der Dämpfungsmasse begünstigt wird, ohne dass ein zusätzliche Scheibe vorgesehen werden muss. Als Schmiermittel können hierbei die verschiedensten Zusammensetzungen in Form von Fetten der Ölen herangezogen werden, wie sie im Handel allgemein erhältlich sind.

Die Erfindung wird im folgenden anhand der Zeichnungen, in welchen zwei Ausführungsbeispiele der Erfindung dargestellt sind, auf die sich jedoch nicht beschränkt sein soll, näher erläutert.

Fig. 1 zeigt im Schnitt einen Schleifapparat, bei dem eine Dämpfungsmasse im Bereich des magnetischen Streufeldes der elektrischen Erregung des Motors des Apparates angeordnet ist.

Fig. 2 zeigt einen Schnitt nach der Linie II—II in Fig. 1, in dem auch der Verlauf der Kraftlinien des magnetischen Streufeldes der elektrischen Erregung des Motors angegeben ist.

Fig. 3 zeigt einen Elektromotor mit einem dauermagnetischen Läufer, wobei eine Dämpfungsmasse im Bereich des magnetischen Streufeldes des Läufers angeordnet ist.

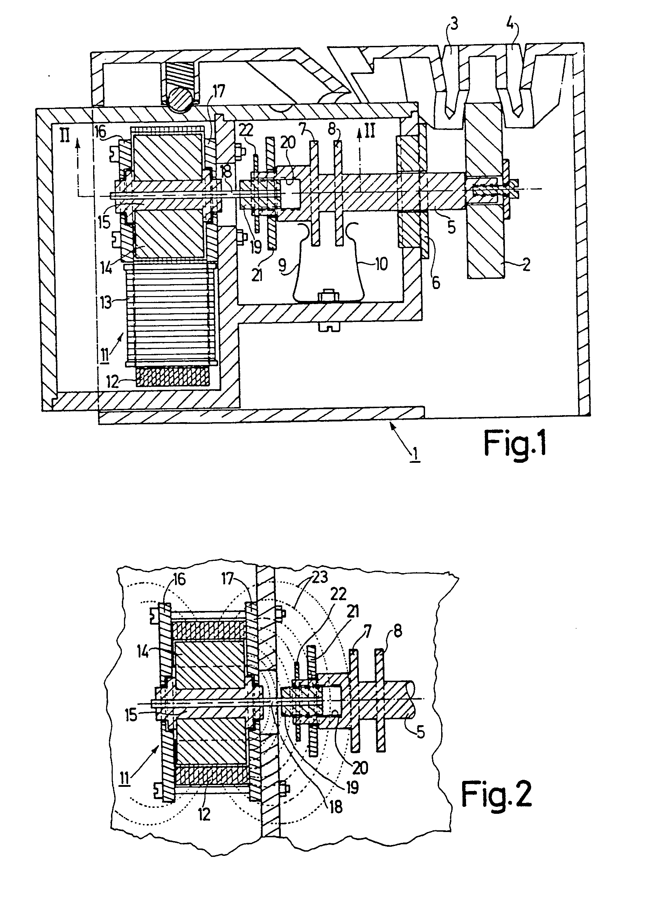

Der in Fig. 1 und 2 dargestellt Schleifapparat, mit dem beispielsweise Messer oder Scheren geschliffen werden können, weist im Inneren seines Gehäuses 1 eine Schleifscheibe 2 auf, wobei die zu schleifenden Gegenstände in am Gehäuse 1 vorgesehene Schlitze 3 oder 4 einlegbar und so an eine Seitenfläche der Schleifscheibe heranführbar sind. Die Schleifscheibe 2 ist auf einer Welle 5 angeordnet, die in einem apparateseitigen Lager 6 drehbar und axial verschiebbar gelagert ist. An der Welle 5 sind zwei Bunde 7 und 8 vorgesehen, die je mit einem Abschnitt 9 bzw. 10 einer Blattfeder zusammenwirken, wobei diese Federabschnitte gegeneinander wirken und so eine Positionierung der Antriebswelle 5 und der Schleifscheibe 2 bewirken. Auf diese Weise kann die Schleifscheibe 2 zusammen mit der Welle 5 unter einem seitlichen Schleifdruck entgegender Wirkung eines der beiden Federabschnitte 9 bzw. 10 ausweichen, wodurch eine Begrenzung des Anpressdruckes eines zu schleifenden Gegenstandes an die Schleifscheibe erhalten wird.

Zum Antreiben der Schleifscheibe 2 weist der Apparat einen Elektromotor 11 auf, der hier durch einen selbstanlaufenden Einphasensynchronmotor gebildet ist. Solche Motoren werden vielfach zum Antreiben kleiner Haushaltgeräte verwendet. Dieser Motor weist einen U-förmigen Stator 12 auf, dessen beide Schenkel je eine Erregerwicklung 13 tragen. Die freien Enden der beiden Statorschenkel umschliessen einen durch einen diametral magnetisierten Dauermagneten gebildeten Läufer 14, der auf einem Träger 15 sitzt, welcher in Lagerschilden 16 und 17 drehbar gelagert ist und aus dem eine Motorwelle 18 herausragt, welche ihrerseits ein Ritzel 19 trägt, das in eine mit einer korrespondierenden Innenverzahnung versehene axiale Bohrung 20 an der Welle 5 eingreift, wodurch die Antriebsverbindung zur axial verschiebbaren Welle 5 hergestellt ist.

Um den Lauf von Einphasensynchronmotoren zu stabilisieren und um ein sicheres Anlaufen derselben zu erhalten, ist es bekannt, an den Abtrieb derartiger Motore eine scheibenförmige Dämpfungsmasse über Reibungsschluss anzukoppeln, welche gegenüber dem Abtrieb frei drehbar und axial beweglich angeordnet ist und unter der Einwirkung einer Kraft gegen einen mit dem Abtrieb umlaufenden Anschlag gedrückt wird. Beim Anlaufen des Motors oder bei Belastungsschwankungen rutscht die Dämpfungsmasse gegenüber dem Anschlag durch, wogegen sie im stabilen Lauf synchron mit dem Abtrieb umläuft. Durch die Reibungsbelastung beim Durchrutschen der Dämpfungsmasse wird in bekannter Weise die stabilisierende Wirkung erhalten, wobei gleichzeitig eine Verbesserung der Leistungsabgabe des Motors erreichbar ist. Um die Kraft zum Andrücken der Dämpfungsmasse an den mit dem Abtrieb umlaufenden Anschlag zu erzeugen, ist nun vorgesehen, dass die zumindest teilweise aus magnetisierbarem Material bestehende Dämpfungsmasse im Bereich eines magnetischen Streufeldes des Motors angeordnet ist und der Anschlag zwischen dem Läufer des Motors und der Dämpfungsmasse liegt. Die durch das magnetische Streufeld des Motors auf die Dämpfungsmasse einwirkende magnetische Kraft bewirkt dann das Andrücken der Dämpfungsmasse an den Anschlag, da sie die Dämpfungsmasse zum Anschlag hinzeiht.

Beim vorliegenden Ausführungsbeispiel ist die aus Eisen bestehende, scheibenförmige Dämpfungsmasse 21 frei drehbar und axial beweglich auf der Welle 5 angeordnet und ist der mit dem Abtrieb umlaufende Anschlag durch eine Scheibe 22 gebildet, die auf der Welle 5 festsitzend zwischen dem Laufer 14 des Motors und der Dämpfungsmasse 21 angeordnet ist. Die Lage der Dämpfungsmasse 21 auf der Welle 5 ist dabei so gewählt, dass die Dämpfungsmasse 21 im Bereich des magnetischen Streufeldes der elektrischen Erregung des Motors angeordnet ist. In Fig. 2 sind die magnetischen Kraftlinien des magnetischen Streufeldes der elektrischen Erregung des Motors durch punktierte Linien 23 angedeutet. Dieses magnetische Steufeld der elektrischen Erregung des Motors entsteht sobald die Erregerwicklungen 13 des Motors an die Speisespannung angeschaltet werden, wobei sich ein magnetische Hauptfeld ausbildet, das sich über die beiden Statorschenkel und den Läufer 14 des Motors schliess, wogegen sich das magnetische Streufeld aussen um die Statorschenkel schliesst. Dieses Streufeld durchsetzt dabei die aus magnetisierbarem Material bestehende Dämpfungsmasse 21, wobei sie gegen den Anschlag 22 gezogen und an diesen angedrückt wird. Auf diese Weise gelangt die Dämpfungsmasse 21 nach dem Anschalten des Motors an seine Speisespannung zur Wirkung, wobei sie dann ihre dämpfende und stabilisierende Funktion ausüben kann. Nach dem Abschalten des Motors von der Speisespannung ist die Dämpfungsmasse 21 dann wieder auf der Welle 5 frei drehbar und axial beweglich.

Wie ersichtlich, sind somit keine zusätzlichen Massnahmen erforderlich, um die Dämpfungsmasse 21 gegen den mit dem Abtrieb umlaufenden Anschlag 22 zu drücken, da dies unmittelbar durch die vom magnetischen Streufeld des Motors bewirkte magnetische Kraft erfolgt, wodurch ein besonders einfacher Aufbau und auch eine besonders einfache Montage erhalten wird.

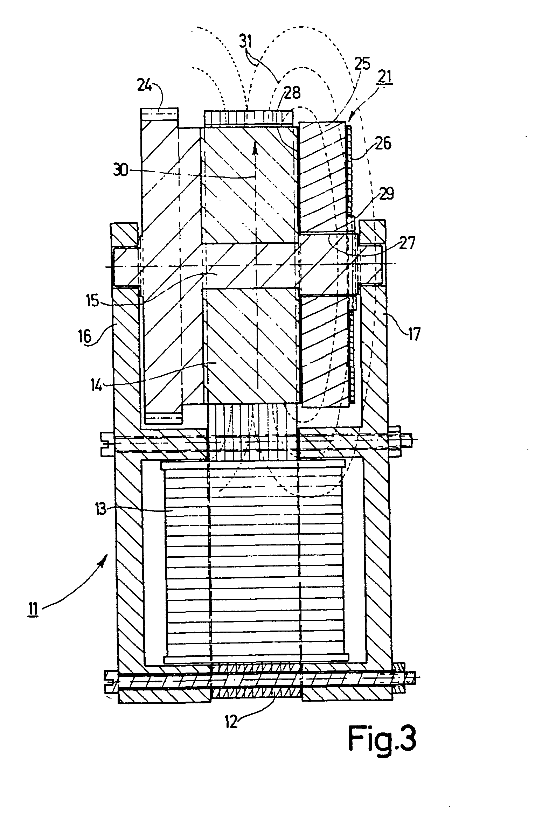

In Fig. 3 ist ein selbstanlaufender Einphasensynchronmotor 11 für sich alleine dargestellt, wie er beispielsweise zum Antrieb eines Trockenrasierapparates verwendet werden kann. Hier ist am Träger 15 für den zylindrischen Läufer 14 unmittelbar ein Zahnrad 24 angeformt, welches einen Teil des Abtriebes des Motors bildet. Die Dämpfungsmasse 21 ist beim vorliegenden Ausführungsbeispiel durch zwei nebeneinander liegende Scheiben 25 und 26 gebildet. Die Scheibe 25 sitzt dabei frei drehbar und axial beweglich auf einem neben dem Läufer 14 verlaufenden Wellenabschnitt 27 des Trägers 15, wobei sie unmittelbar an seine Seitenfläche 28 des Läufers 14 angrenzt, die hier als mit dem Abtrieb umlaufender Anschlag wirksam ist. Die zweite Scheibe 26 sitzt ebenfalls frei drehbar und axial beweglich auf einer zylindrischen Absetzung 29, die an der vom Läufer 14 abgewandten Seite der Scheibe 25 vorgesehen ist, wordurch die Scheibe 26 vom Wellenabschnitt 27 und damit vom Abtrieb freigestellt ist und damit keine Reibungsverluste gegenüber dem Wellenabschnitt 27 bzw. dem Abtrieb hervorruft. An sich wäre es aber auch möglich, die Scheibe 26 auf den Wellenabschnitt 27 selbst aufzusetzen. Die erste Scheibe 25 besteht dabei aus nichtmagnetisierbarem Material, wogegen die andere zweite Scheibe 26 aus magnetisierbarem Material gerfertigt ist. Die erste Scheibe 25 bildet dabei vorwiegend die Dämpfungsmasse an sich. Die andere zweite Scheibe 26 ist wesentlich dünner als die Scheibe 25 ausgeführt, und zwar mindestens um das Zehnfache dünner und dient dazu, die Andruckkraft der Scheibe 25 an die Seitenfläche 28 des Läufers 14 zu liefern. Durch diese zweiteilige Ausführungsform der Dämpfungsmasse 21 als Scheiben 25 und 26 kan für die Scheibe 25 ein schwereres Material, wie beispielsweise Messing, verwendet werden, das nicht magnetisierbar ist, wogegen die magnetisierbare Scheibe 26 aus Eisen bestehen kann. Auf diese Weise ist eine besonders günstige Dimensionierung der gesamten Dämpfungsmasse 21 möglich.

Beim vorliegenden Ausführungsbeispiel ist die gesamte Dämpfungsmasse 21 im Bereich des magnetischen Streufeldes des Läufers 14 angeordnet, der aus einem diametral magnetisierten Dauermagneten besteht, dessen Magnetisierungsrichtung durch den Pfeil 30 angegeben ist. Das magnetische Streufeld des Läufers 14 schliesst sich seitlich um den Läufer, die dies in Fig. 3 durch die strichlierten Linien 31 angedeutet ist. Durch dieses magnetische Streufeld des dauermagnetischen Läufers 14 wird die zweite aus magnetisierbarem Material bestehende Scheibe 26 dauernd in Richtung zur Seitenfläche 28 des Läufers hingezogen, wodurch die dazwischen liegende Scheibe 25 ständig an diese den mit dem Abtrieb umlaufenden Anschlag bildende Seitenfläche 28 angedrückt wird. Auf diese Weise kann die Dämpfungsmasse 21 wieder eine dämpfende und stabilisierende Wirkung auf den Lauf des Läufers 14 ausüben.

Dadurch, dass beim vorliegenden Ausführungsbeispiel die Dämpfungsmasse 21 unmittelbar an eine Seitenfläche 28 des Laufers 14 angrenzt, wird ein sehr kompakter Aufbau erhalten. An sich wäre es natürlich auch möglich, analog wie beim Ausführungsbeispiel nach den Fig. 1 und 2, einen separaten Anschlag für die Dämpfungsmasse 21 vorzusehen.

Zu erwähnen ist auch noch, dass die zweite Scheibe 26 nicht für sich alleine frei drehbar und axial beweglich angeordnet sein muss, sondern auch mit der Scheibe 25 fest verbunden sein könnte, wie beispielsweise durch Kleben. Selbstverständlich könnte auch bei diesem Ausführungsbeispiel, ebenso wie beim Ausführungsbeispiel nach den Fig. 1 und 2, nur eine einzige aus magnetisierbarem Material bestehende Scheibe als Dämpfungsmasse zur Anwendung kommen. Durch das Vorsehen der nicht magnetisierbaren Scheibe 25 zwischen dem Läufer 14 und der magnetisierbaren Scheibe 26 wird aber hier der weitere Vorteil erhalten, dass die Scheibe 25 die Scheibe 26 etwas vom Läufer 14 distanziert, wodurch der durch die Scheibe 26 gebildete Magnetische Nebenschluss zum dauermagnetischen Läufer 14 geringer ist. Eine andere Möglichkeit wäre, in eine aus nichtmagnetisierbarem Material bestehende Scheibe aus magnetisierbarem Material bestehende Teile einzusetzten, die dann unter der Einwirkung des magnetischen Streufeldes des Motors für das Andrücken der Scheibe an den mit dem Abtrieb unlaufenden Anschlag Sorge tragen.

Als Sehr zweckmässig hat sich auch erwiesen, wenn die einander gegenüberliegenden Seitenflächen des Anschlages und der Dämpfungsmasse mit einem Schmiermittel versehen werden, wodurch die Reibungsverhältnisse zwischen diesen beiden Teilen dahingehende beeinflussbar sind, dass ein Durchrutschen der Dämpfungsmasse begünstigt wird. Als Schmiermittel können hierbei die verschiedensten Fette oder Öle verwendet werden, wie sie allgemein im Handel erhältlich sind, beispielsweise "Alania Fett R2" oder "Precision Fluid 78".

Wie ersichtlich, besteht somit eine Reihe von Abwandlungen der im vorstehenden beschriebenen Ausführungsbeispiele, ohne dass dabei der Rahmen der Erfindung verlassen wird. Dies gilt insbesondere im Hinblick auf die Ausbildung und Anordnung der Dämpfungsmasse an sich, sowie ihr Zusammenwirken mit dem mit dem Abtrieb umlaufenden Anschlag, an den sie unter der Einwirkung eines magnetischen Streufeldes des Motors angedrückt wird. Selbstverständlich sind die erfindungsgemässen Massnahmen nicht nur bei einem selbstanlaufenden Einphasensynchronmotor anwendbar sondern bei allen Motoren, bei welchen mittels einer Dämpfungsmasse eine Stabilisierung ihres Laufes bzw. eine Verbesserung ihres Anlaufverhaltens erreichbar ist, so beispielsweise auch bei sogenannten Schrittmotoren.

### Patentansprüche

1. Elektromotor mit einer Dämpfungseinrichtung, die eine gegenüber dem Abtrieb frei drehbar und axial beweglich angeordnete, zumindest teilweise aus magnetisierbarem Material bestehende scheibenförmige Dämpfungsmasse (21) aufweist, die unter der Einwirkung einer magnetischen Kraft reiben gegen einen mit dem Abtrieb umlaufenden Anschlag (22) gedrückt wird, dadurch gekennzeichnet, daß der Motor eine Einphasensynchronmotor (11) mit einem zweipoligen dauermagnetischen Läufer (14) und einem Stator (12) mit Spulen (13) ist, wobei
—die Dämpfungsmasse im Bereich eines magnetischen mit Abstand neben dem Synchronmotor wirksamen Streufeldes des Synchronmotors angeordnet ist,
—der Anschlag zwischen dem Läufer des Synchronmotors und der Dämpfungsmasse liegt, und
—die auf die Dämpfungsmasse einwirkende magnetische Kraft durch das magnetische Streufeld des Synchronmotors verursacht wird.

2. Motor nach Anspruch 1, dadurch gekennzeichnet, daß die Dämpfungsmasse (21) im Bereich des magnetischen Streufeldes der elektrischen Erregung der Spulen (13) des Stators (12) angeordnet ist.

3. Motor nach Anspruch 1, dadurch gekennzeichnet, daß die Dämpfungsmasse (21) im Bereich des magnetischen Streufeldes des Läufers (14) angeordnet ist.

4. Motor nach Anspruch 3, dadurch gekennzeichnet, daß bei einem zylindrische ausgebildeten Läufer des Motors der Anschlag (22) durch eine Seitenfläche (28) des Läufers (14) gebildet ist.

5. Motor nach einem der vorhergehenden Ansprüche, dadurch gekennzeichnet, daß die Dämpfungsmasse durch zwei nebeneinander liegende Scheiben (25, 26) gebildet ist, von welchen die dem Anschlag benachbarte, erste Scheibe (25) aus nicht magnetisierbarem Material und die andere, zweite Scheibe (26) aus magnetisierbarem Material besteht.

6. Motor nach Anspruch 1, dadurch gekennzeichnet, daß die zweite Scheibe (26) als gegenüber der ersten vorwiegend die Dämpfungsmasse bildenden Scheibe (25) mindestens um das Zehnfache dünnere Scheibe ausgebildet ist.

7. Motor nach Anspruch 5 oder 6, dadurch gekennzeichnet, daß die zweite Scheibe (26) vom Abtrieb freigestellt ist.

8. Motor nach einem der vorhergehenden Ansprüche, dadurch gekennzeichnet, daß die einander gegenüberliegenden Seitenflächen des Anschlages (22) und der Dämpfungsmasse (21) mit einem Schmiermittel versehen sind.

### Revendications

1. Moteur électrique avec un dispositif d'amortissement comportant une masse d'amortissement discoïde (21) constituée au moins en partie d'une matière magnétisable qui est montée de manière à pouvoir se déplacer dans le sens axial et à pouvoir tourner librement par rapport à l'arbre de sortie et qui est pressée sous l'effet d'une force magnétique contre une butée (22) tournant avec l'arbre de sortie, caractérisé en ce que le moteur est un moteur synchrone monophasé (11) comportant un rotor (14) bipolaire à magnétisation permanente et un stator (12) avec des enroulements (13), étant entendu que:
—la masse d'amortissement est disposée dans le domaine d'un champ de dispersion magnétique du moteur synchrone qui est actif à une certaine distance à côté de ce moteur,
—la butée est située entre le rotor du moteur synchrone et la masse d'amortissement, et
—la force magnétique agissant sur la masse d'amortissement est provoquée par le champ de dispersion magnétique du moteur synchrone.

2. Moteur suivant la revendication 1, caractérisé en ce que la masse d'amortissement (21) est disposée dans le domaine du champ de dispersion magnétique de l'excitation électrique des enroulements (13) du stator (12).

3. Moteur suivant la revendication 1, caractérisé en ce que la masse d'amortissement (21) est disposée dans le domaine du champ de dispersion magnétique du rotor (14).

4. Moteur suivant la revendication 3, caractérisé en ce que dans la cas où le rotor du moteur a une force cylindrique, la butée (22) est formée par une face latérale (28) du rotor (14).

5. Moteur suivant l'une quelconque des revendications précédentes, caractérisé en ce que la masse d'amortissement est formée par deux disques (25, 26) disposés côte à côte, dont le premier (25), qui est le plus proche de la butée, est fait d'une matière non magnétisable et l'autre, c'està-dire le second (26) est fait d'une matière magnétisable.

6. Moteur suivant la revendication 1, caractérisé en ce que le second disque (26) a une épaisseur au moins dix fois plus petite que celle du premier disque (25) qui forme principalement la masse d'amortissement.

7. Moteur suivant la revendication 5 ou 6, caractérisé en ce que le second disque (26) est libéré de l'arbre de sortie.

8. Moteur suivant l'une quelconque des revendications précédentes, caractérisé en ce que les faces latérales de la butée (22) et de la masse d'amortissement (21) qui se font face sont pourvues d'un lubrifiant.

**Claims**

1. An electric motor with a damping device comprising a disc-shaped damping mass (21) made at least partly of a magnetisable material and arranged to be axially movable and freely rotatable relative to the driven element, which mass is pressed against a stop (22) under the influence of a magnetic force, said stop rotating with the driven element, characterized in that the motor is a single-phase synchronous motor (11) comprising a two-pole permanent-magnet rotor (14) and a stator (12) with coils (13),
—the damping mass being arranged within the range of a magnetic stray field of the synchronous motor, which field is active at some distance adjacent the synchronous motor,
—the stop being interposed between the rotor of the synchronous motor and the damping mass, and
—the magnetic force which acts upon the damping mass being produced by the magnetic stray field of the synchronous motor.

2. A motor as claimed in Claim 1, characterized in that the damping mass (21) is arranged within the range of the magnetic stray field of the electrical excitation of the coils (13) of the stator (12).

3. A motor as claimed in Claim 1, characterized in that the damping mass (21) is arranged within the range of the magnetic stray field of the rotor (14).

4. A motor as claimed in Claim 3, characterized in that in a motor having a cylindrically shaped rotor the stop (22) is formed by a radial surface (28) of the rotor (14).

5. A motor as claimed in any of the preceding Claims, characterized in that the damping mass is formed by two juxtaposed discs (25, 26), of which the first disc (25) adjacent the stop is made of a non-magnetisable material and the other, second disc (26) is made of a magnetisable material.

6. A motor as claimed in Claim 5, characterized in that the second disc (26) takes the form of a disc which is at least ten times as thin as the first disc (25), which is mainly constitutes the damping mass.

7. A motor as claimed in Claim 5 or 6, characterized in that the second disc (26) is clear of the driven element.

8. A motor as claimed in any of the preceding Claims, characterized in that the facing radial surfaces of the stop (22) and the damping mass (21) are provided with a lubricant.

EP 0 142 211 B1

Fig.1

Fig.2

Fig.3